# EUROPEAN PATENT APPLICATION

(11) **EP 1 708 489 A1**
(43) Date of publication of application: **04.10.2006**
(21) Application number: 06112110.9
(22) Date of filing: 31.03.2006
(51) Int. Cl.: H04N 5/208, H04N 5/57

(54) **Image-quality adjusting apparatus, image-quality adjusting method, and display apparatus**

(30) Priority: 31.03.2005 JP 2005104993
(71) Applicant: Pioneer Corporation, Meguro-ku, Tokyo (JP)
(72) Inventor: Okumichi, Kenji Pioneer Corporation, Ohta-ku Tokyo (JP); Kawaguchi, Hirofumi Pioneer Corporation, Nakakoma-gun Yamanashi (JP)
(74) Representative: Viering, Jentschura & Partner

(57) **Abstract**

An image-quality adjusting apparatus (1, 20, 30) adjusts image quality of a video image corresponding to a video signal by performing signal processing for the video signal. The image-quality adjusting apparatus is provided with: a level detecting device (3) for detecting a level of the video signal, for each of a plurality of frequency bands of the video signal; and an image-quality adjusting device (4, 5, 21, 31) for adjusting the image quality of the video image, on the basis of the level in each of the plurality of frequency bands of the video signal detected by said level detecting device, for each of the plurality of frequency bands of the video signal.

## Description

### BACKGROUND OF THE INVENTION

### 1. Field of the Invention

The present invention relates to an image-quality adjusting apparatus and an image-quality adjusting method which can be used for a display apparatus for displaying a video image or an image, as well as the display apparatus provided with the image-quality adjusting apparatus.

### 2. Description of the Related Art

In most display apparatuses, such as a plasma display, a liquid crystal display, and a CRT (Cathode Ray Tube), for example, an image-quality adjusting apparatus is provided. The image-quality adjusting apparatus is an apparatus for adjusting image quality, and as the image-quality adjusting apparatus, there are a sharpness adjusting apparatus, a brightness adjusting apparatus, a color adjusting apparatus and the like.

In the image-quality adjusting apparatus, the image-quality is uniformly adjusted, regardless of the frequency of a video signal. Thus, there are the following problems, for example.

In the sharpness adjusting apparatus, the intensity of sharpness (i.e., the magnitude or degree of sharpness, or the intensity of definition) is uniformly adjusted, regardless of the frequency of a video signal. Thus, there is such a problem that in a video image in which a high-video-frequency portion is unclear and a low-video-frequency portion is clear, overshoot occurs in the low-video-frequency portion if the sharpness intensity is increased in order to improve the unclearness of the high-video-frequency portion, so that it is hardly possible to successfully perform the sharpness adjustment of the entire video image.

Moreover, in the brightness adjusting apparatus, brightness is uniformly adjusted, regardless of the frequency of a video signal. Thus, there is such a problem that in a video image in which a high-video-frequency portion is dark and a low-video-frequency portion is bright, for example, the low-video-frequency portion is excessively brightened if the brightness is increased in order to brighten the high-video-frequency portion, so that it is hardly possible to successfully adjust the brightness of the entire video image.

Moreover, in the color adjusting apparatus, color depth or saturation is uniformly adjusted, regardless of the frequency of a video signal. Thus, there is such a problem that in a video image in which a high-video-frequency portion is light and a low-video-frequency portion is deep or dark, for example, the low-video-frequency portion excessively becomes deep if the color is adjusted in order to deepen the high-video-frequency portion, so that it is hardly possible to successfully adjust the color of the entire video image.

### SUMMARY OF THE INVENTION

It is therefore an object of the present invention to provide an image-quality adjusting apparatus, an image-quality adjusting method, and a display apparatus, which can produce good image quality in accordance with video frequency.

The above object of the present invention can be achieved by an image-quality adjusting apparatus for adjusting image quality of a video image corresponding to a video signal by performing signal processing for the video signal, the image-quality adjusting apparatus provided with: a level detecting device for detecting a level of the video signal, for each of a plurality of frequency bands of the video signal; and an image-quality adjusting device for adjusting the image quality of the video image, on the basis of the level in each of the plurality of frequency bands of the video signal detected by the level detecting device, for each of the plurality of frequency bands of the video signal.

According to the image-quality adjusting apparatus, the sharpness intensity is adjusted on the basis of the level of each of the plurality of frequency bands of the video signal, for each frequency band of the video signal. Thus, it is possible to produce good image quality, in accordance with video frequency.

The above object of the present invention can be also achieved by an image-quality adjusting method of adjusting image quality of a video image corresponding to a video signal by performing signal processing for the video signal, the image-quality adjusting method provided with: a level detecting process of detecting a level of the video signal, for each of a plurality of frequency bands of the video signal; and an image-quality adjusting process of adjusting the image quality of the video image, on the basis of the level in each of the plurality of frequency bands of the video signal detected by the level detecting device, for each of the plurality of frequency bands of the video signal.

According to the image-quality adjusting method, it is possible to produce good image quality, in accordance with video frequency.

The above object of the present invention can be also achieved by a display apparatus provided with the above-mentioned image-quality adjusting apparatus of the present invention (including its various aspects).

The above object of the present invention can be also achieved by a computer program of instructions for tangibly embodying a program of instructions executable by a computer, to make the computer function as the above-mentioned image-quality adjusting apparatus of the present invention (including its various aspects).

According to the computer program of the present invention, the above-mentioned image-quality adjusting apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

The nature, utility, and further features of this invention will be more clearly apparent from the following detailed description with reference to preferred embodiment of the invention when read in conjunction with the accompanying drawings briefly described below.

### BRIEF DESCRIPTION OF THE DRAWINGS

FIG. 1 is a front view showing an embodiment of the display apparatus of the present invention;
FIG. 2 is a block diagram showing a sharpness adjusting apparatus which is a first embodiment of the image-quality adjusting apparatus of the present invention;
FIG. 3 is a block diagram showing a level detection circuit in FIG. 2;
FIG. 4 is a block diagram showing a sharpness adjustment circuit in FIG. 2;
FIG. 5 is a waveform chart showing a video signal;
FIG. 6 is a waveform chart showing the video signal before the adjustment of sharpness intensity and the video signal after the adjustment of the sharpness intensity, in the case where the sharpness intensity of the video signal is uniformly increased, regardless of a frequency band;
FIG. 7 is a waveform chart showing the video signal before the adjustment of sharpness intensity and the video signal after the adjustment of the sharpness intensity, in the case where the sharpness intensity is increased, only for a frequency component which belongs to a selected particular frequency band, out of the video signal;
FIG. 8 is a block diagram showing a brightness adjusting apparatus which is a second embodiment of the image-quality adjusting apparatus of the present invention; and
FIG. 9 is a block diagram showing a color depth adjusting apparatus which is a third embodiment of the image-quality adjusting apparatus of the present invention.

### DETAILED DESCRIPTION OF THE PREFERRED EMBODIMENTS

Hereinafter, the embodiments of the present invention will be discussed with reference to the drawings.

### (First Embodiment)

At first, as the first embodiment of the image-quality adjusting apparatus and the image-quality adjusting method of the present invention, a sharpness adjusting apparatus to which the present invention is applied will be discussed.

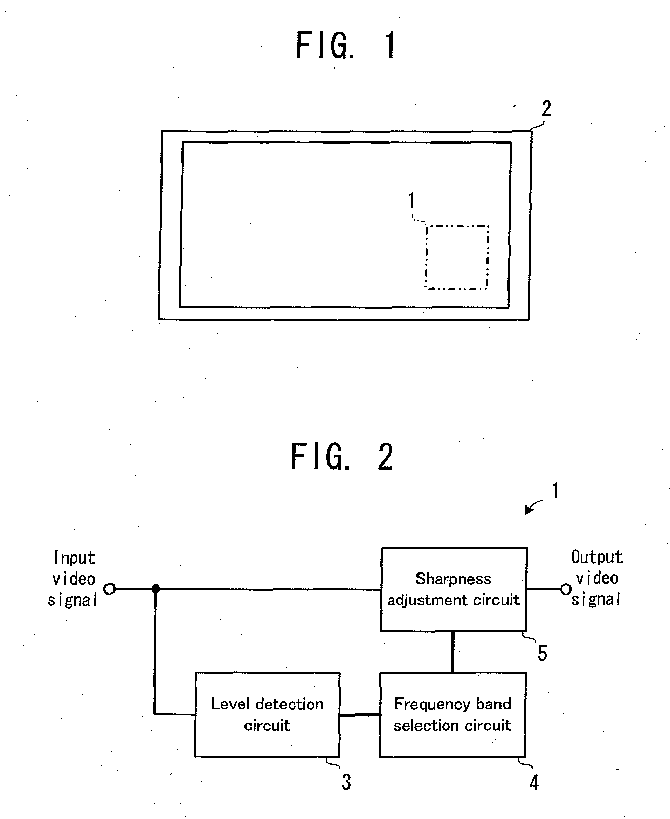

FIG. 1 shows a display apparatus provided with the sharpness adjusting apparatus to which the present invention is applied. A sharpness adjusting apparatus 1 to which the present invention is applied is preferably used for a display apparatus 2 as shown in FIG. 1, for example. The display apparatus 2 is a plasma display, a liquid crystal display, a CRT display, or the like, for example. According to the display apparatus 2 provided with the sharpness adjusting apparatus 1, it is possible to produce good image quality in accordance with video frequency.

FIG. 2 shows the structure of the sharpness adjusting apparatus 1. The sharpness adjusting apparatus 1 is an apparatus for adjusting the sharpness of a video image corresponding to a video signal, by performing signal processing for the video signal. The sharpness adjusting apparatus 1 is provided with: a level detection circuit 3; a frequency-band selection circuit 4; and a sharpness adjustment circuit 5. Incidentally, the video signal may be an analog video signal or a digital video signal.

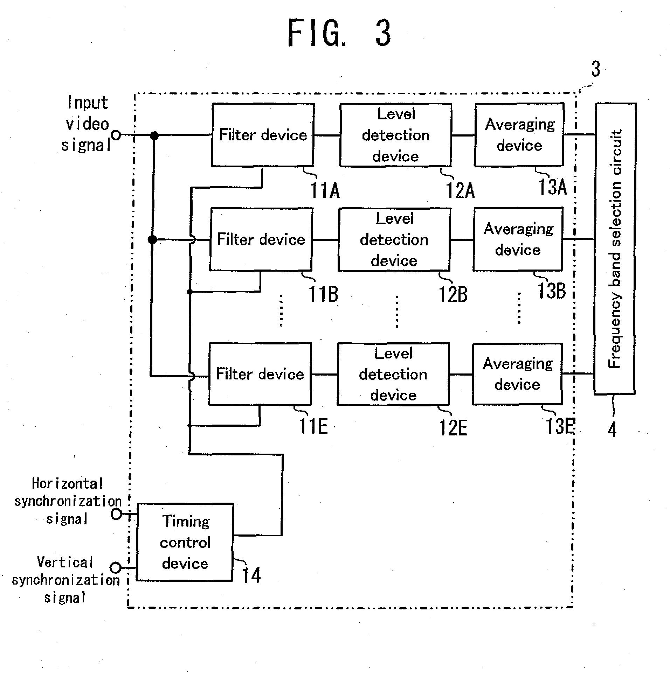

FIG. 3 shows the structure of the level detection circuit 3. The level detection circuit 3 detects the level of the video signal, for each of five frequency bands of the video signal. Namely, the level detection circuit 3 detects the size of an amplitude in a scanning interval for the video signal, i.e., the size of an amplitude in a portion of the video signal in which information for determining the brightness and the color of each picture element (or pixel) which constitutes an image is included, for each of the five different frequency bands. As shown in FIG. 3, the level detection circuit 3 is provided with: five filter devices 11A to 11E; five level detection devices 12A to 12E; five averaging devices 13A to 13E; and a timing control device 14.

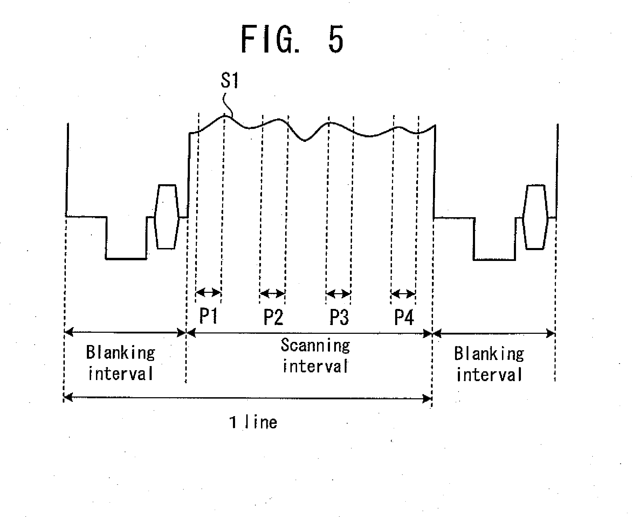

The filter devices 11A to 11E extract one portion of the video signal, in a predetermined detection section in the scanning interval, and divide this into respective five different frequency components. For example, as shown in FIG. 5, the filter devices 11A to 11E extract a portion of a video signal S1 in each of detection sections P1 to P4, which are set in the scanning interval of the video signal S1. Moreover, for the filter devices 11A to 11E, respective five different band passes are set. The extracted portion of the video signal is divided by the filter devices 11A to 11E into the respective five frequency components which respond to the five band passes. Each of the filter devices 11A to 11E can be constructed from a band pass filter or the like.

Each of the level detection devices 12A to 12E detects the level of the frequency component of the video signal extracted by respective one of the filter devices 11A to 11E.

Each of the averaging devices 13A to 13E accumulates the level of the frequency component of the video signal detected by respective one of the level detection devices 12A to 12E, for one frame or one field, and divides the accumulated value obtained by the accumulation, by the number of detection sections which are set in the video signal which constitutes one frame or one field. As a result, it is possible to obtain the substantial average value of the level of each frequency component of the entire video signal which constitutes one frame. Namely, it is possible to obtain five substantial average values, for the five levels of the five frequency components of the video signal. As described above, according to the averaging devices 13A to 13E, by accumulating the level of the frequency component of the video signal in the plurality of detection sections, and by dividing the accumulated value obtained the accumulation by the number of the detection sections, it is possible to obtain the substantial average value of the level of each frequency component of the entire video signal.

The timing control device 14 controls the timing that the filter devices 11A to 11E perform the extracting process for the video signal, on the basis of a vertical synchronization signal and a horizontal synchronization signal. Incidentally, the vertical synchronization signal and the horizontal synchronization signal can be produced by that a not-illustrated synchronization circuit divides or separates a vertical synchronization pulse and a horizontal synchronization pulse from the blanking interval of the video signal.

The frequency band selection circuit 4 selects a particular frequency band, on the basis of the level of each frequency band of the video signal detected by the level detection circuit 3 (specifically, the substantial average value of the level of each frequency component of the entire video signal which constitutes one frame). For example, the frequency band selection circuit 4 detects the frequency component with a lower level than a predetermined level, from among the five frequency components of the video signal which belong to respective five frequency bands, and selects the frequency band which contains the selected frequency component. Then, the frequency band selection circuit 4 generates a selection signal which indicates the selected frequency band.

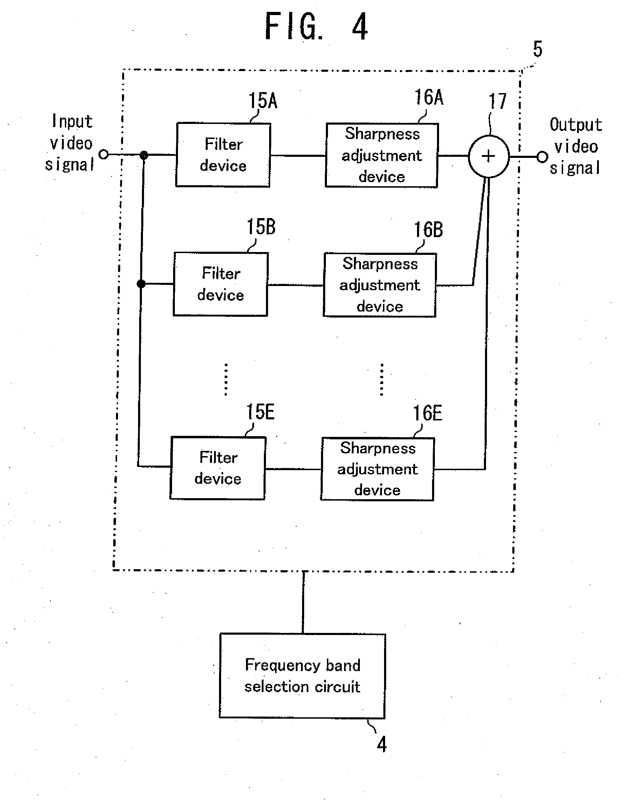

FIG. 4 shows the structure of the sharpness adjustment circuit 5. The sharpness adjustment circuit 5 adjusts the sharpness intensity of the video image, on the basis of the level in each of the five frequency bands of the video signal detected by the level detection circuit 3, for each of the five frequency bands. For example, the sharpness adjustment circuit 5 adjusts the sharpness intensity, for the frequency component of the video signal which belongs to the particular frequency band selected by the frequency band selection circuit 4. As shown in FIG. 4, the sharpness adjustment circuit 5 is provided with: five filter devices 15A to 15E; five sharpness adjustment devices 16A to 16E; and an adder 17. The filter devices 15A to 15E divide the video signal into respective five different frequency components. Each of the filter devices 15A to 15E can be constructed from a band pass filter or the like, for example. Each of the sharpness adjustment devices 16A to 16E adjusts the sharpness intensity of each frequency component of the video signal. The adder 17 combines the frequency components of the video signal divided by the filter devices 15A to 15E, into one video signal.

The operation of the sharpness adjusting apparatus 1 is as follows. If a video signal is inputted to the sharpness adjusting apparatus 1, the video signal is inputted to both the level detection circuit 3 and the sharpness adjustment circuit 5, in the sharpness adjusting apparatus 1. Then, the level detection circuit 3 extracts the portion of the video signal from the plurality of extraction sections set in the scanning interval of the video signal, divides the extracted portion of the video signal into the five frequency components, and detects the level of each frequency component. Moreover, the level detection circuit 3 generates the substantial average value of the level of each frequency component of the video signal which constitutes one frame, and outputs it to the frequency band selection circuit 4. Then, the frequency band selection circuit 4 detects the frequency component with a lower level than a predetermined level, from among the five frequency components of the video signal which belong to respective five frequency bands, generates a selection signal which indicates the frequency band which contains the detected frequency component, and outputs it to the sharpness adjustment circuit 5. Then, the sharpness adjustment circuit 5 adjusts the sharpness intensity, for the frequency component of the video image which belongs to the frequency band indicated by the selection signal. Specifically, the sharpness adjustment devices 16A to 16E adjust the sharpness intensity, for the frequency component of the video image which belongs to the frequency band indicated by the selection signal.

As explained above, the sharpness adjusting apparatus 1 adjusts the sharpness intensity, on the basis of the level of each of the plurality of frequency bands of the video signal, for each frequency band of the video signal, only for the frequency component with a low level, for example. By this, it is possible to produce good image quality, in accordance with video frequency.

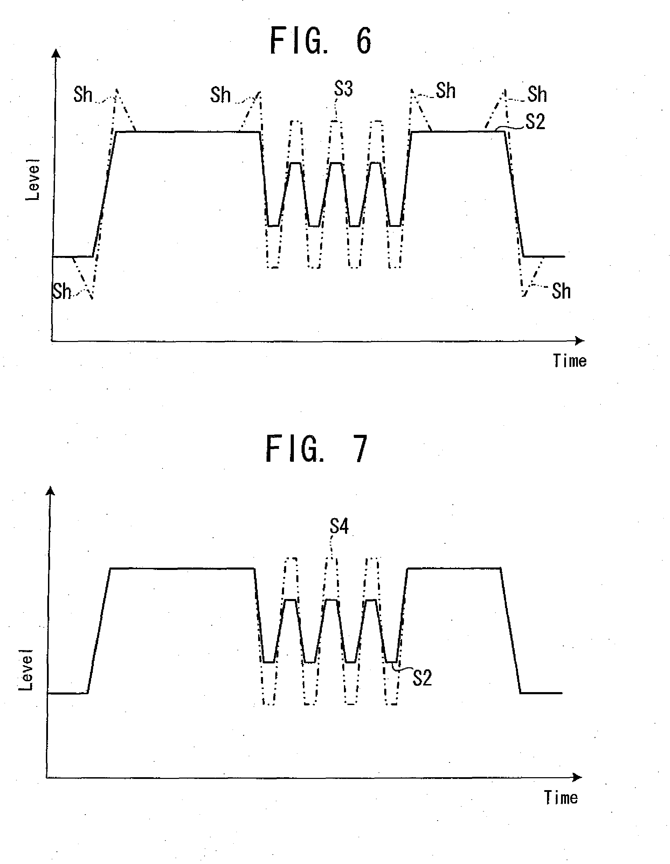

FIG. 6 shows the case where the sharpness intensity of the video signal is uniformly increased, regardless of the frequency band. Namely, a video signal S2 shown in a solid line in FIG. 6 is a video signal before the sharpness intensity is increased, and a video signal S3 shown in a two-dot chain line is a video signal after the sharpness intensity is increased. Since the sharpness intensity of the video signal is uniformly increased, regardless of the frequency band, the video signal S3 has overshoot components Sh. The overshoot components Sh deteriorate image quality.

On the other hand, FIG. 7 shows the case where the sharpness intensity is increased, only for the frequency component which belongs to the selected particular frequency band, out of the video signal; specifically, only for the frequency component with a lower level than a predetermined level. Namely, a video signal S2 shown in a solid line in FIG. 7 is a video signal before the sharpness intensity is increased, and a video signal S4 shown in a two-dot chain line is a video signal after the sharpness intensity is increased. Since the sharpness intensity of the video signal is uniformly increased, only for the frequency component with a lower level than the predetermined level, the video signal S4 does not have any overshoot component. Since there is no overshoot component, good image quality can be obtained.

Incidentally, the level detection circuit 3 is a specific example of the level detecting device and the level detecting process. The averaging devices 13A to 13E are a specific example of the average-value generating device. The frequency band selection circuit 4 is a specific example of the selecting device. The sharpness adjustment circuit 5 is a specific example of the image-quality adjusting device, the selective image-quality adjusting device, the image-quality adjusting process, and the sharpness adjusting device.

Moreover, in the level detection circuit 3, as described above, the level in the plurality of detection sections set in the scanning interval of the video signal is detected for each of the plurality of frequency bands, and the average value of the level in the plurality of detection sections is generated for each of the plurality of frequency bands. However, the level detecting device of the present invention is not limited to this. For example, the level may be detected for each of the plurality of frequency bands, in the entire scanning interval of the video signal in one line, and the value of the detected level may be generated by one frame or one field. Moreover, the average value may be generated for each two frames or more.

Moreover, the video signal is divided into the five frequency components in the sharpness adjusting apparatus 1; however, the video signal may be divided into two, four, six or more frequency components.

Moreover, in sharpness adjusting apparatus 1, such a case is exemplified that the sharpness intensity is adjusted for the frequency component with a lower level than the predetermined level; however, the present invention is not limited to this case. For example, the sharpness intensity may be adjusted for a frequency component with a higher level than the predetermined level, out of the video signal. Moreover, it is also possible to set the proportion of adjusting the sharpness intensity, in accordance with the level of each frequency component detected by the level detection circuit 3. For example, the adjustment proportion may be set to have a large adjustment amount of the sharpness intensity for the frequency component with a lower level and to have a small adjustment amount of the sharpness intensity for the frequency component with a higher level.

### (Second Embodiment)

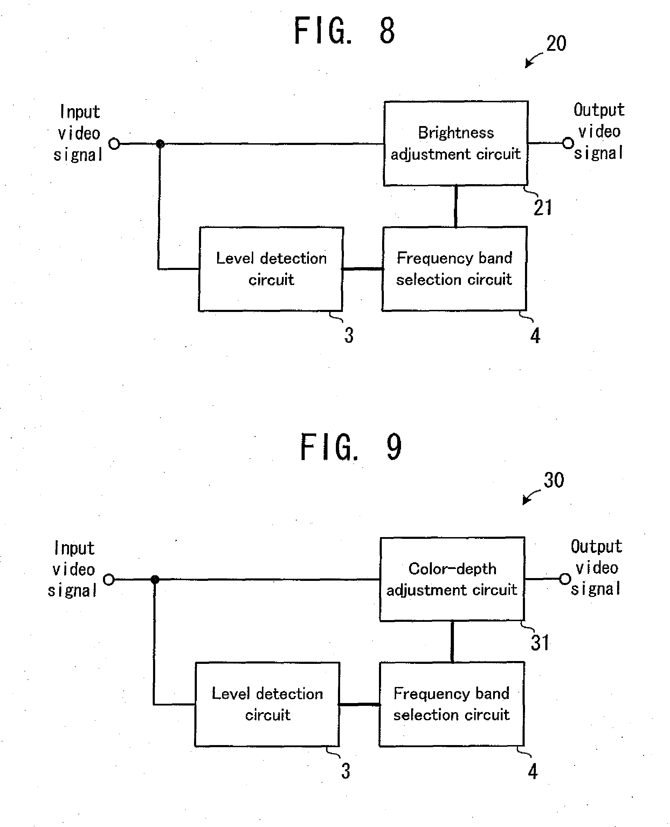

Next, as the second embodiment of the image-quality adjusting apparatus and the image-quality adjusting method of the present invention, a brightness adjusting apparatus to which the present invention is applied will be discussed. FIG. 8 shows the brightness adjusting apparatus to which the present invention is applied. Incidentally, in the brightness adjusting apparatus in FIG. 8, the same constitutional elements as those of the sharpness adjusting apparatus shown in FIG. 2 carry the same numerical references, and the explanation thereof is omitted.

A brightness adjusting apparatus 20 is an apparatus for adjusting the brightness of a video image. The brightness adjusting apparatus 20 is provided with: the level detection circuit 3; the frequency-band selection circuit 4; and a brightness adjustment circuit 21.

The brightness adjustment circuit 21 adjusts the brightness of a video image, for each of the plurality of frequency bands, on the basis of the level in each of the plurality of frequency bands of the video signal detected by the level detection circuit 3. For example, the brightness adjustment circuit 21 adjusts the brightness, for the frequency component of the video signal which belongs to the particular frequency band selected by the frequency-band selection circuit 4. The brightness adjustment circuit 21 is provided with: a plurality of filter devices; a plurality of brightness adjustment devices; a plurality of switches; and an adder, substantially in the same manner as the sharpness adjustment circuit 5 shown in FIG. 4. Moreover, in the brightness adjustment circuit 21, substantially the same points as the sharpness adjustment circuit 5 shown in FIG. 4 are that the video signal is divided into the plurality of frequency components by the plurality of filter devices, that whether or not to adjust the brightness is selected by the change of the switches, that the change of the plurality of switches is controlled on the basis of the selection signal, and that the plurality of frequency components are combined by the adder into one video signal.

The operation of the brightness adjusting apparatus 20 is as follows. If a video signal is inputted to the brightness adjusting apparatus 20, the video signal is inputted to both the level detection circuit 3 and the brightness adjustment circuit 21, in the brightness adjusting apparatus 20. Then, the level detection circuit 3 extracts the portion of the video signal from the plurality of extraction sections set in the scanning interval of the video signal, divides the extracted portion of the video signal into the plurality of frequency components, and detects the level of each frequency component. Moreover, the level detection circuit 3 generates the substantial average value of the level of each frequency component of the video signal which constitutes one frame, and outputs it to the frequency band selection circuit 4. Then, the frequency band selection circuit 4 detects the frequency component with a lower level than a predetermined level, from among the frequency components of the video signal which belong to respective frequency bands, generates a selection signal which indicates the frequency band which contains the detected frequency component, and outputs it to the brightness adjustment circuit 21. Then, the brightness adjustment circuit 21 adjusts the brightness, for the frequency component of the video image which belongs to the frequency band indicated by the selection signal.

As explained above, the brightness adjusting apparatus 20 adjusts the brightness, on the basis of the level of each of the plurality of frequency bands of the video signal, for each frequency band of the video signal, only for the frequency component with a low level, for example. By this, it is possible to produce good image quality, in accordance with video frequency. Incidentally, the brightness adjustment circuit 21 is a specific example of the brightness adjusting device.

### (Third Embodiment)

Next, as the third embodiment of the image-quality adjusting apparatus and the image-quality adjusting method of the present invention, a color-depth adjusting apparatus to which the present invention is applied will be discussed. FIG. 9 shows the color-depth adjusting apparatus to which the present invention is applied. Incidentally, in the color-depth adjusting apparatus in FIG. 9, the same constitutional elements as those of the sharpness adjusting apparatus shown in FIG. 2 carry the same numerical references, and the explanation thereof is omitted.

A color-depth adjusting apparatus 20 is an apparatus for adjusting the color-depth of a video image. The color-depth adjusting apparatus 20 is provided with: the level detection circuit 3; the frequency-band selection circuit 4; and a color-depth adjustment circuit 31.

The color-depth adjustment circuit 31 adjusts the color-depth of a video image, for each of the plurality of frequency bands, on the basis of the level in each of the plurality of frequency bands of the video signal detected by the level detection circuit 3. For example, the color-depth adjustment circuit 31 adjusts the color-depth, for the frequency component of the video signal which belongs to the particular frequency band selected by the frequency-band selection circuit 4. The color-depth adjustment circuit 31 is provided with: a plurality of filter devices; a plurality of color-depth adjustment devices; a plurality of switches; and an adder, substantially in the same manner as the sharpness adjustment circuit 5 shown in FIG. 4. Moreover, in the color-depth adjustment circuit 31, substantially the same points as the sharpness adjustment circuit 5 shown in FIG. 4 are that the video signal is divided into the plurality of frequency components by the plurality of filter devices, that whether or not to adjust the color-depth is selected by the change of the switches, that the change of the plurality of switches is controlled on the basis of the selection signal, and that the plurality of frequency components are combined by the adder into one video signal.

The operation of the color-depth adjusting apparatus 30 is as follows. If a video signal is inputted to the color-depth adjusting apparatus 30, the video signal is inputted to both the level detection circuit 3 and the color-depth adjustment circuit 31, in the color-depth adjusting apparatus 30. Then, the level detection circuit 3 extracts the portion of the video signal from the plurality of extraction sections set in the scanning interval of the video signal, divides the extracted portion of the video signal into the plurality of frequency components, and detects the level of each frequency component. Moreover, the level detection circuit 3 generates the substantial average value of the level of each frequency component of the video signal which constitutes one frame, and outputs it to the frequency band selection circuit 4. Then, the frequency band selection circuit 4 detects the frequency component with a lower level than a predetermined level, from among the frequency components of the video signal which belong to respective frequency bands, generates a selection signal which indicates the frequency band which contains the detected frequency component, and outputs it to the color-depth adjustment circuit 31. Then, the color-depth adjustment circuit 31 adjusts the color-depth, for the frequency component of the video image which belongs to the frequency band indicated by the selection signal.

As explained above, the color-depth adjusting apparatus 30 adjusts the color-depth, on the basis of the level of each of the plurality of frequency bands of the video signal, for each frequency band of the video signal, only for the frequency component with a low level, for example. By this, it is possible to produce good image quality, in accordance with video frequency. Incidentally, the color-depth adjustment circuit 31 is a specific example of the color-depth adjusting device.

Incidentally, the image-quality adjusting apparatus of the present invention is not necessarily realized by an exclusive circuit provided for the display apparatus, and may be realized in another form. For example, it is also possible to make a computer function as the image-quality adjusting apparatus. In other words, it is possible to realize the image-quality adjusting apparatus by preparing a computer program to realize a noise-level detecting function and an image-quality adjusting function or the like, by allowing the computer to read the computer program, and by using circuit resources mounted on the computer or circuit resources connected to the computer.

## Claims

1. An image-quality adjusting apparatus (1, 20, 30) for adjusting image quality of a video image corresponding to a video signal by performing signal processing for the video signal, **characterized in that** said image-quality adjusting apparatus comprises :
a level detecting device (3) for detecting a level of the video signal, for each of a plurality of frequency bands of the video signal; and
an image-quality adjusting device (4, 5, 21, 31) for adjusting the image quality of the video image, on the basis of the level in each of the plurality of frequency bands of the video signal detected by said level detecting device, for each of the plurality of frequency bands of the video signal.

2. The image-quality adjusting apparatus (1, 20, 30) according to claim 1, **characterized in that** said level detecting device (3) comprises: an average-value generating device (11A to 11E, 12A to 12E, 13A to 13E) for detecting a level in a plurality of detection sections set in a scanning interval of the video signal for each of the plurality of frequency bands, and for generating an average value of the level included in the plurality of detection sections for each of the plurality of frequency bands.

3. The image-quality adjusting apparatus according to claim 1 or 2, **characterized in that** said image-quality adjusting device (4, 5, 21, 31) comprises:
a selecting device (4) for selecting a particular frequency band on the basis of the level in each of the plurality of frequency bands of the video signal detected by said level detecting device; and
a selective image-quality adjusting device (5, 21, 31) for adjusting image-quality for a frequency component of the video signal which belongs to the frequency band selected by said selecting device.

4. The image-quality adjusting apparatus (1, 20, 30) according to claim 3, **characterized in that** said selecting device (4) detects a frequency component with a lower level than a predetermined level, from among a plurality of frequency components of the video signal which belong to the respective plurality of frequency bands, and selects the frequency band which contains the detected frequency component.

5. The image-quality adjusting apparatus (1, 20, 30) according to any one of claims 1 to 4, **characterized in that** said image-quality adjusting device (5, 21, 31) comprises a sharpness adjusting device (5) for adjusting sharpness of the video image.

6. The image-quality adjusting apparatus (1, 20, 30) according to any one of claims 1 to 4, **characterized in that** said image-quality adjusting device (5, 21, 31) comprises a brightness adjusting device (21) for adjusting brightness of the video image.

7. The image-quality adjusting apparatus (1, 20, 30) according to any one of claims 1 to 4, **characterized in that** said image-quality adjusting device (5, 21, 31) comprises a color-depth adjusting device (31) for adjusting color-depth of the video image.

8. An image-quality adjusting method of adjusting image quality of a video image corresponding to a video signal by performing signal processing for the video signal, **characterized in that** said image-quality adjusting method comprises:
a level detecting process of detecting a level of the video signal, for each of a plurality of frequency bands of the video signal; and
an image-quality adjusting process of adjusting the image quality of the video image, on the basis of the level in each of the plurality of frequency bands of the video signal detected by said level detecting process, for each of the plurality of frequency bands of the video signal.

9. A display apparatus (2) **characterized in that** said display apparatus comprises said image-quality adjusting apparatus (1, 20, 30) according to any one of claims 1 to 7.

10. A computer program of instructions for tangibly embodying a program of instructions executable by a computer, **characterized in that** said computer program makes the computer function as said image-quality adjusting apparatus (1, 20, 30) according to any one of claims 1 to 7.
